# EUROPÄISCHE PATENTSCHRIFT

(11) **EP 1 150 077 B1**
(45) Veröffentlichungstag und Bekanntmachung des Hinweises auf die Patenterteilung: **03.11.2004**
(21) Anmeldenummer: 01105993.8
(22) Anmeldetag: 10.03.2001
(51) Int. Cl.: F25B 35/04, F25B 17/08

(54) **Sorptionsbehälter-Anordnung mit flexibler Hülle**
Sorption container with flexible casing
Conteneur à sorption avec une enveloppe flexible

(30) Priorität: 27.04.2000 DE 10020560
(43) Veröffentlichungstag der Anmeldung: 31.10.2001
(73) Patentinhaber: ZEO-TECH Zeolith Technologie GmbH, 85716 Unterschleissheim (DE)
(72) Erfinder: Maier-Laxhuber, Peter, Dr., 85386 Dieterseheim (DE); Becky, Andreas, 85521 Ottobrunn (DE); Wörz, Reiner, Dipl.-Ing., 85293 Reichertshausen (DE); Richter, Gert, 85716 Unterschleissheim (DE); Totschnig, Leo, Dipl.-phys, 80939 München (DE)

(56) Entgegenhaltungen:
- DE-A- 3 016 290
- DE-A- 3 901 558
- DE-A- 19 929 718
- DE-C- 591 680
- GB-A- 786 368
- GB-A- 2 126 705
- US-A- 4 736 572
- US-A- 4 974 419
- US-A- 5 729 988

## Beschreibung

Die Erfindung betrifft Sorptionsbehälter-Anordnungen mit flexibler Hülle und Verfahren zur Befüllung mit Sorptionsmitteln gemäß dem Oberbegriff des Anspruches 1.

Sorptionsmittel sind Stoffe, welche ein weiteres, in der Regel leichter flüchtiges Arbeitsmittel auf der Oberfläche oder in ihrer kapillaren Hohlraumstruktur sorbieren. Dadurch können sie auch zur Wärmetransformation eingesetzt werden. Ausführungsformen solcher Apparaturen finden sich beispielsweise in den Europäischen Patentschriften EP 0 151 237 und EP 0 205 167.
Die hier verwandten Sorptionsmittel sorbieren unter Wärmefreisetzung ein dampfförmiges Arbeitsmittel auf mittlerem Temperaturniveau, das bei tieferen Temperaturen aus einem Verdampfer angesaugt wird. Das verdampfende Arbeitsmittel erzeugt im Verdampfer Kälte. In einem folgenden Prozessschritt wird durch Wärmezufuhr bei höheren Temperaturen das Arbeitsmittel wieder dampfförmig aus dem Sorptionsmittel ausgetrieben und in einem Kondensator auf mittlerem Temperaturniveau rückverflüssigt.

Um eine schnelle Arbeitsmitteldampfaufnahme bzw. -abgabe zu erreichen, ist eine gute Wärmeleitung im Sorptionsmittel und ein guter Wärmeübergang zu Wärmequellen und - senken notwendig.

In der Europäischen Patentanschrift EP 0 151 786 ist ein Sorptionsmittelformling mit hoher Wärmeleitung und ein Verfahren zu seiner Herstellung beschrieben. Das pulverförmige Sorptionsmittel Zeolith wird dabei mit Bindemittel und Wasser vermischt und im fließfähigen Zustand in Behältnisse, insbesondere Wärmetauscher, gegossen. Nach dem Trocknen und Erstarren der pastösen Mischung ist der gesamte Wärmetauscher durch Zeolith bis auf einige gezielt angebrachte Strömungskanäle ausgekleidet. Von Nachteil ist, dass sich bei häufigen und schnellen Temperaturwechseln der Zeolith-Formling von der Wärmetauscheroberfläche ablöst. Ein schneller Wärmeaustausch zwischen Wärmetauscher und Zeolith ist dann nicht mehr gewährleistet.

In der EP 0892225 ist eine Wärmetauscher-Anordnung beschrieben, in der das Sorptionsmittel strangartige Profilkörper bildet, welche derart ausgestaltet sind, dass mit ihnen ein flächiger Kontakt zu Außen-Blechen herstellbar ist und dass mittels der strangartigen Profilkörper Kanäle zur Durchleitung des Arbeitsmitteldampfes gebildet werden. Die Profilkörper müssen hier den Konturen der Außen-Bleche nachgeformt sein.

*Aus der DE 3901558 A ist eine Sorptionsbehälter-Anordnung mit einer gasdichten Hülle aus Edelstahlwellschläuchen zur Aufnahme eines festen Sorptionsmittels bekannt. Wellschläuche sind zwar flexibel und können im Unterdruck die Wellenflanken an die Sorptionsmittelfüllung pressen, die Herstellung derartiger Schläuche ist jedoch äußerst aufwendig und teuer. Ein Sorptionsbehälter-Bündel aus mehreren Schläuche bedingt zwischen den Schläuchen relativ viel ungenutzten Raum. Der Druckabfall durch ein Schlauchbündel ist für einen Wärmeträgerstrom zudem recht hoch.*

Zeolithe werden als Pulver und als Granulat in Kugel- bzw. Zylindergeometrie gehandelt. Die Verwendung von pulverförmigen Zeolithen ist in Sorptionssystemen der oben genannten Bauart nicht möglich, da durch den zu- und abströmenden Arbeitsmitteldampf Stäube unkontrolliert abgetragen werden. Die Verwendung von granuliertem Sorptionsmittel ist zwar möglich, führt aber durch die schlechte Wärmeleitung und die schlechte Wärmekontaktierung zu den bereits beschriebenen Nachteilen.

Da die Desorptions-Temperaturen bei Zeolith oberhalb von 200 °C liegen, ist zum Regenerieren der Einsatz metallischer Wärmetauscher geboten. Eine haltbare Verbindung von Zeolith auf metallischen Oberflächen, ist nicht bekannt. Aufgrund unterschiedlicher Wärmeausdehnungskoeffizienten lösen sich die Beschichtungen ab. Sobald aber Spalte zwischen Sorptionsmittel und Wärmetauscheroberflächen entstehen, ist eine Wärmeübertragung stark eingeschränkt. Abgelöste Beschichtungen gelangen in die Strömungskanäle und können den freien Zutritt von Arbeitsmitteldampf blockieren. Dies hat wiederum längere Zyklenzeiten zur Folge und erfordert größere Sorptionsmittelmengen für die jeweils vorgesehene Anwendung.

Aufgabe der Erfindung ist eine Sorptionsbehälter-Anordnung, bei welcher eine rasche Temperaturerhöhung und -absenkung des Sorptionsmittels durch eine sehr gute und haltbare Anbindung an den Wärmetauscher möglich ist.

Gelöst wird diese Aufgabe bei einer Sorptionsbehälter-Anordnung der beschriebenen Art durch die kennzeichnenden Merkmale der Ansprüche 1 und 9.

Die Verwendung einer dünnen, flexiblen Hülle als Behälter-Außenwand, die gleichzeitig als Wärmetauscher fungiert, führt zu mehreren Vorteilen.
Zum einen lässt sich durch die dünne Hülle erheblich Material einsparen. Die Anordnungen werden dadurch leichter, billiger und Energie effizienter, da weniger fühlbare Wärme zum Aufheizen der Sorptionsbehälter aufzuwenden ist. Insbesondere können wegen der dünnwandigen Hüllen großflächigere Wärmetauschergeometrien verwirklicht werden, welche die gleiche große Fläche sowohl gegenüber dem Sorptionsmittel als auch gegenüber dem äußeren Wärmeträgermedium bieten. Auf einseitig oder gar beidseitig berippte Wärmetauscher kann verzichtet werden.
Zum anderen schmiegt sich eine dünne und flexible Hülle in optimaler Weise der Sorptionsmittelfüllung an. Der Wärmekontakt von der Hülle zum Sorptionsmittel ist wegen der großen Berührungsflächen und dem kräftigen Anpressdruck optimal.
Die Oberflächenstrukturen der Sorptionsmittelfüllungen sind damit von nachrangiger Bedeutung.
Durch den flexiblen Aufbau der Anordnungen können unterschiedliche Wärmedehnungen der Materialien problemlos ausgeglichen werden. Dünne Spalte zwischen Sorptionsmittel und Wärmetauscher, welche die Wärmeübertragung erheblich reduzieren, treten nicht mehr auf.
Da die erfindungsgemäße Sorptionsbehälter-Anordnung nur bei Sorptionsstoffpaarungen möglich sind, die im Vakuum betrieben werden, ist der äußere Luftdruck durch das Sorptionsmittel selbst zu kompensieren. Es kann demzufolge nur für eine kleine Auswahl von Sorptionsmittelpaarungen, bei denen das Sorptionsmittel ein Feststoff ist und auch während aller Betriebszustände fest bleibt, verwendet werden. All diese Kriterien werden insbesondere von Zeolithen und verwandten Siliziumverbinden in Kombination mit dem Arbeitsmittel Wasser erfüllt. Zeolithe sind stabil genug um alle auftretenden Kräfte aufzunehmen selbst dann, wenn sie zusätzlich mit Strömungskanälen durchzogen sind.

Strömungskanäle können z. B. in separat geformten Formkörpem auf bekannte Weise eingearbeitet sein. Die einzelnen Formkörper werden dann entsprechend der vorgesehenen Kanalstruktur zwischen die flexible Hülle eingelegt und diese dann zu einem geschlossen Vakuumsystem verbunden.

Die Verbindung einzelner elastischen Hüllenteile zu einer geschlossenen, gasdichten Hülle können durch Schweißverfahren (bei Metallen und Kunststoffen) oder durch Lötverfahren hergestellt werden. Die Wandstärken der Hüllen liegen dabei vorteilhaft zwischen 0,03 und 1 mm. Geeignet sind selbstverständlich auch Kombinationen mehrerer Werkstoffe, wie etwa metallbeschichtete Folien. Das Hüllenmaterial selbst sollte zumindest während der Einsatzzeiten gasdicht sein, selbst keine, das Vakuum abbauenden Gase abgeben und den während der Sorption auftretenden thermischen Belastungen standhalten.

In den meisten Anwendungen sind neben einem Sorptionsbehälter weitere Komponenten wie Verdampfer und Kondensatoren an die Hülle angeschlossen. In einzelnen Fällen kann es von Vorteil sein, wenn auch diese Komponenten aus dem Hüllenmaterial einstückig aufgebaut sind. Die Strömungskanäle sind dann durch zusätzliche Einbauten zwischen den Hüllenteilen aufrecht zu erhalten.

Bei der Verwendung von Sorptionsmittel-Granulat (z.B. in Kugel- oder Stäbchenform) kann die Sorptionsbehälter-Anordnung erfindungsgemäß nach den kennzeichnenden Merkmalen des Anspruchs 9 gefüllt werden. Auf diese Weise können selbst bei sehr dünnen Folienstärken höchst passgenaue und komplexe Sorptionsbehälter-Anordnungen auf einfache Weise hergestellt werden.
Die dabei zum Einsatz kommenden Form-Vorrichtungen weisen Oberflächengeometrien auf, welche die Hüllenform aufnehmen können. Bei sehr dünnwandigen Hüllen, insbesondere bei Kunststofffolien lassen sich die Oberflächengeometrien während des Füllvorgangs direkt in das Folienmaterial einprägen. Eine vorausgehende Formgebung des Hüllenmaterials kann dadurch entfallen.

Besonders vorteilhaft verläuft die Befüllung der innerhalb der Form-Vorrichtung durch Vakuum fixierten Hüllenmaterialen bei kugelförmigem Granulat. Dieses rieselt auch in die entfernteren Bereiche der Sorptionsbehälter-Anordnung. Die Einfüllöffnung kann klein bleiben und abschließend durch Rollnaht-Schweißung schnell und gasdicht verschlossen werden.
Kugelfüllungen bieten zudem den Vorteil, dass die Hohlräume zwischen den Kugeln als Strömungskanäle für den Arbeitsmittel-Dampf zur Verfügung stehen. Bedingt durch den äußeren Überdruck werden die Kugeln fest auf ihre jeweilige Nachbarkugeln gepresst. Der Wärmeübergang ist dadurch in allen Betriebsphasen dauerhaft gesichert. Selbst beim Zerbrechen einzelner Kugeln (z. B. durch thermische Spannungen oder äußere Einwirkungen) rollen benachbarte Kugeln in die entstehenden Freiräume. Die flexible Hülle selbst passt sich automatisch der neuen Geometrie an und fixiert die Schüttung weiter. Die erfindungsgemäßen Vorteile bleiben somit erhalten Da sich die einzelnen Kugeln der Kugelschüttung nicht gegeneinander bewegen können, ist ein Abrieb der Füllung, z. B. durch Erschütterungen bei mobilen Einsätzen, ausgeschlossen.

Die Geometrien der Hüllenoberflächen können dem jeweiligen Einsatzzweck in idealer Weise angepasst sein. So können die Hüllen beispielsweise so geprägt werden, dass der maximale Wärmeleitweg für die Zu- und die Ableitung der Sorptionswärme maximal 2 cm betragen. Vorteilhaft sind Wärmeleitwege von weniger als 0,5 cm.

Als vorteilhaft haben sich Oberflächengeometrien erwiesen, die geeignet sind die äußergen Wärmeträgermedien zu lenken und gleichzeitig als Abstandshalter für nebeneinander angeordnete Hüllen zu fungieren. Zwischen zwei Hüllen können somit ohne zusätzlichen Materialaufwand Strömungswege erzeugt werden.

Sorptionsbehälter-Anordnungen können Absperreinrichtungen enthalten, um den Sorptionsprozess zu steuern oder einzelne Komponenten vom Zutritt des Arbeitsmittels abzusperren.

In der Zeichnung sind Ausführungsformen der Erfindung dargestellt.

Es zeigt:
Fig. 1 eine Sorptionsbehälter-Anordnung mit einer durchsichtigen Kunststoff-Hülle,
Fig. 2 einen Schnitt durch die Sorptionsbehälter-Anordnung nach Fig. 1 entlang der Schnittlinie AA,
Fig. 3 eine Vorrichtung zum Befüllen einer Sorptionsbehälter-Anordnung und
Fig. 4 einen Schnitt durch die komplettierte Vorrichtung zum Befüllen nach Fig. 3 entlang der Schnittlinie BB.

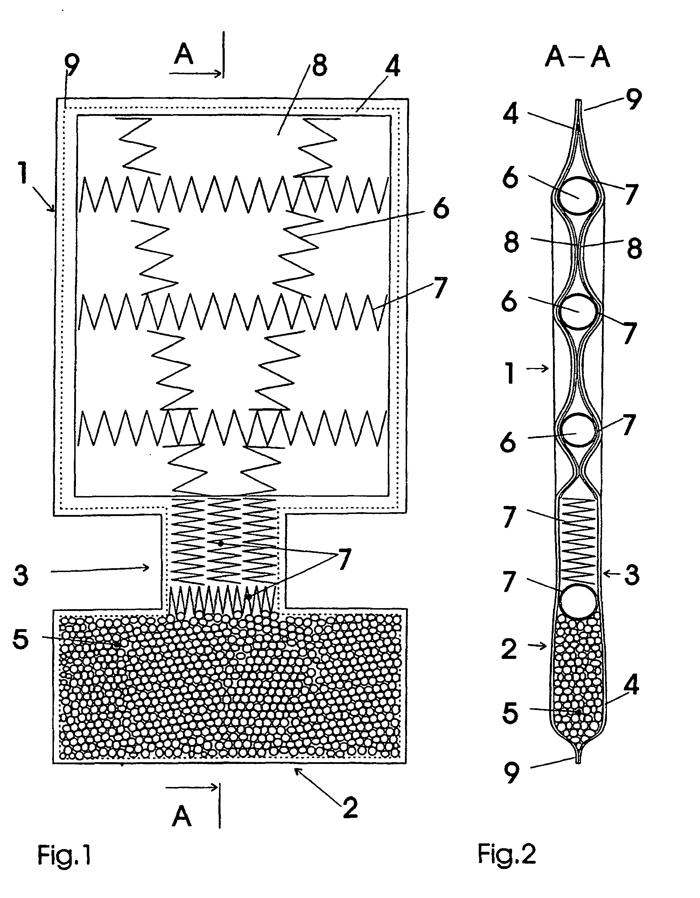

Die Sorptionsbehälter-Anordnung nach Fig. 1 und Fig. 2 besteht aus einem Verdampfer 1, und einem Sorptionsbehälter 2, die über einen Dampfkanal 3 miteinander verbunden sind. Alle drei Komponenten 1,2,3 sind von einer flexiblen, durchsichtigen Kunststoff-Hülle 4 umgeben, die aus zwei tiefgezogenen Halbschalen gefertigt ist. Die Halbschalen sind am Rand 9 umlaufend thermisch verschweißt. Der Sorptionsmittelbehälter 2 enthält granulierten Zeolith 5, der in diesem Bereich die flexible Hülle 4 gegen den äußeren Luftdruck abstützt. Der Dampfkanal 3 wird, ebenso wie seine Verlängerungen 6 im Verdampfer 1 durch Spiralfedern 7 gegen den äußeren Luftdruck gestützt. Durch die Kanäle der Spiralfedern 7 strömt Arbeitsmitteldampf, der aus einem mit Wasser getränkten Papier 8 verdampf und vom Zeolith 5 sorbiert wird. Das Papier 8 hat guten thermischen Kontakt zur Hülle 4, da durch den äußeren Überdruck die Hülle 4 auf das Papier 8 gepresst wird.

Die Sorptionsbehälter-Anordnung kann unter atmosphärischen Bedingungen vorgefertigt werden. Die tiefgezogenen Halbschalen der Hülle 4 werden mit Spiralfedern 7, wassergetränktem Papier 8 und Zeolith 5 gefüllt und bis auf eine Öffnung im Rand thermisch verschweißt. Da in der Sorptionsbehälter-Anordnung Luft ist, ist die Sorptionsreaktion unterbunden. Zum Start der Sorption wird die Anordnung auf Drücke unterhalb des Wasserdampfdruckes evakuiert und die kleine Öffnung verschweißt. Die Evakuierung und die Verschweißung kann in einer handelsüblichen Vakuum-Verpackungsmaschine erfolgen.
Während der Sorptionsreaktion wird der Verdampfer 1 kalt und der Sorptionsbehälter 2 heiß. Die Kälte kann beispielsweise zur Kühlung einer Kühltasche benutzt werden, währenddessen der Sorptionsbehälter 2 ein Getränk heiß hält.

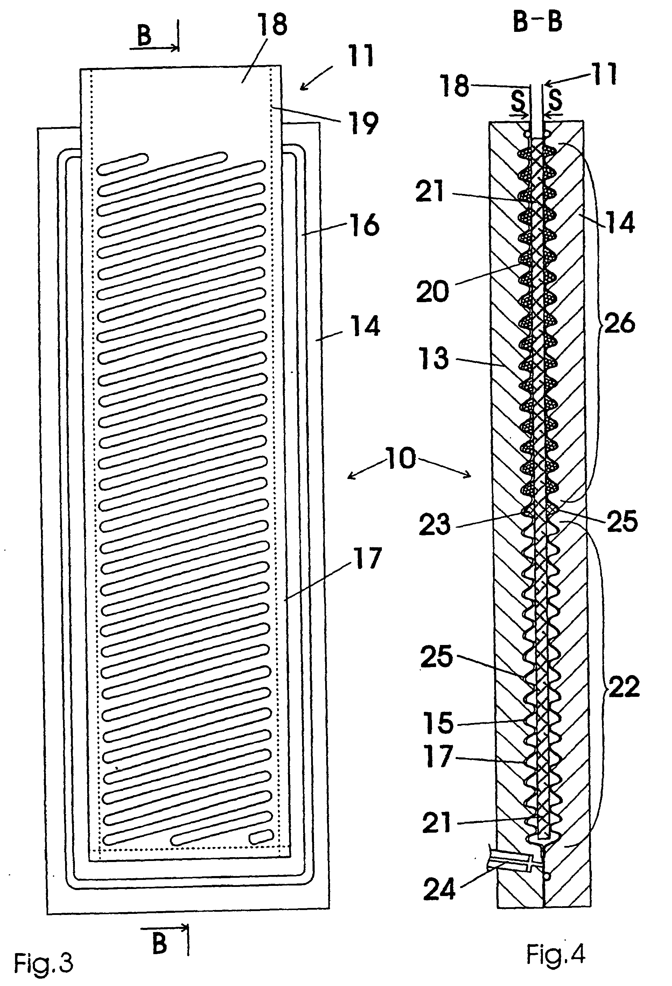

Fig. 3 und Fig. 4 zeigen eine evakuierbare Form-Vorrichtung 10 mit einer Sorptionsbehälter-Anordnung 11. Die Form-Vorrichtung 10 besteht aus einem oberen Form-Vorrichtungsteil 13 und aus einem unteren Form-Vorrichtungsteil 14, die einen evakuierbaren Raum 15 zur Aufnahme der Sorptionsbehälter-Anordnung 11 bilden.

In Fig. 3 ist der untere Form-Vonrichtungsteil 14 dargestellt, der eine umlaufende Dichtung 16 enthält. Die Hülle 17 der Sorptionsbehälter-Anordnung 11 ist in Vertiefungen 25 des unteren Form-Vorrichtungsteils 14 eingelegt. Das obere Hüllen-Teil 18 ragt dabei über das untere Form-Vorrichtungsteil 14 hinaus. Die Hülle 17 besteht aus zwei Halbschalen, die bereits auf drei Seiten durch Schweißnähte 19 miteinander verschweißt sind. Die vierte Seite ist noch im Bereich des oberen Hüllen-Teils 18 offen. Die Sorptionsbehälter-Anordnung 11 enthält einen Strömungskanal 21 aus Gittergewebe für die Wasserdampfströmung vom Verdampferbereich 22 in das Zeolith-Granulat 20. Der Strömungskanal 21 dient zugleich als Abstandshalter im Verdampferbereich 22, der nicht wie der Sorptionsmittelbehälter 26 mit Zeolith-Granulat 20 aufgefüllt ist. Eine Barriere aus Stahlwolle 23 verhindert, dass das Zeolith-Granulat 20 beim Einfüllen und beim späteren Gebrauch der Anordnung in den Verdampferbereich 22 rollt.
Vor dem Befüllen mit Zeolith-Granulat 20 wird die Hülle 17 zwischen das untere 14 und das obere Formvorrichtungsteil 13 gelegt. Über eine Absaugleitung 24 wird der Raum 15 zwischen der Hülle 17 und der der Hüllenform entsprechenden Vertiefungen 25 evakuiert. Die flexible Hülle 17 legt sich dabei exakt in die parallel verlaufenden Vertiefungen 25 der Formvorrichtungsteile 13 und 14. Durch den äußeren Luftdruck wird die Hülle 17 exakt ausgerichtet und zum Befüllen fixiert. Nach dem Befüllen mit Zeolith-Granulat 20 wird auch der obere Hüllen-Teil 18 an den mit S markierten Stellen verschweißt. Die Sorptionsbehälter-Anordung 11 ist im Innenbereich entweder vor dem Verschweißen oder über eine kleine Absaugöffnung nachträglich evakuiert worden. Nach dem Evakuieren des Innenraumes wird der Raum 15 geflutet und die fertig gefüllte und evakuierte Sorptionsbehälter-Anordnung 11 aus der Form-Vorrichtung 10 entnommen.
Die Vertiefungen 25 in der Form-Vorrichtung 10 korrespondieren mit parallelen Erhöhungen in der Hüllenoberfläche. Werden mehrere Sorptionsbehälter-Anordnungen 11 übereinander gestapelt, entstehen zwischen den Erhöhungen Strömungskanäle für Luft, die Wärme zur Hülle bzw. von der Hülle abführen kann. Erfindungsgemäß verlaufen die parallelen Erhöhungen auf der Vorder- und Rückseite der Sorptionsbehälter-Anordnung gegenläufig. Für gestapelte Anordnungen sind dann keine zusätzlichen Distanzhalter nötig. Die Luftströmung wird vorteilhaft geschert und turbulent verwirbelt.

## Patentansprüche

1. Sorptionsbehälter-Anordnung mit einer gasdichten Hülle (4) zur Aufnahme eines festen Sorptionsmittels (5), das beim Erhitzen ein Arbeitsmittel dampfförmig desorbiert und bei niedrigeren Temperaturen exotherm sorbiert und wobei Wärme über die Hülle (4) in das feste Sorptionsmittel (5) zu- bzw. abgeführt wird,
der Gesamtdruck innerhalb der Hülle (4) während aller Betriebsphasen nicht höher als der äußere Atmosphärendruck ist und die Hülle (4) so flexibel ist, dass sie durch die Druckdifferenz auf das feste Sorptionsmittel (5) gepresst wird und das feste Sorptionsmittel (5) so ausgebildet ist, dass es für das zu- und abströmende Arbeitsmittel Strömungskanäle aufweist und als tragende Struktur für die Hülle (4) dient,
**dadurch gekennzeichnet, dass**
die Hülle (4) zwei Halbschalen enthält, die am Rand (9) umlaufend verschweißt sind.

2. Sorptionsbehälter-Anordnung nach Anspruch 1,
**dadurch gekennzeichnet, dass**
die Geometrie des festen Sorptionsmittels (5) so gewählt ist, dass die abzuführende Wärme einen Wärmeleitweg von maximal 2 cm innerhalb des festen Sorptionsmittels (5) zurücklegen muss um mit der Hülle (4) in Kontakt zu kommen.

3. Sorptionsbehälter-Anordnung nach einem der vorangehenden Ansprüche,
**dadurch gekennzeichnet, dass**
das feste Sorptionsmittel (5) eine Granulat-Schüttung (20), insbesondere eine Kugelschüttung enthält.

4. Sorptionsbehälter-Anordnung nach einem der vorangehenden Ansprüche,
**dadurch gekennzeichnet, dass**
das Sorptionsmittel (5) in quaderförmigen Formstücken enthalten ist, die sich zwischen der Hülle (4) befinden und in die Strömungskanäle eingeformt sind.

5. Sorptionsbehälter-Anordnung nach einem der vorangehenden Ansprüche,
**dadurch gekennzeichnet, dass**
die Hülle (4) dünne, flexible Metall- oder Kunststoff-Folien mit einer Materialstärke von 0,03 mm bis 1 mm enthält.

6. Sorptionsbehälter-Anordnung nach einem der vorangehenden Ansprüche,
**dadurch gekennzeichnet, dass**
das Sorptionsmittel (5) Zeolithe oder Siliziumverbindungen und das Arbeitsmittel Wasser enthält.

7. Sorptionsbehälter-Anordnung nach einem der vorangehenden Ansprüche,
**dadurch gekennzeichnet, dass**
die Hülle (4) Verformungen aufweist, die im äußeren Bereich geeignet sind, Wärmeträgermedien, insbesondere Luft zu lenken.

8. Sorptionsbehälter-Anordnung nach einem der vorangehenden Ansprüche,
**dadurch gekennzeichnet, dass**
die Hüllenoberflächen wellenförmige Verformungen aufweisen, die sich mit der jeweils benachbarten Hüllenoberfläche kreuzen.

9. Verfahren zum Befüllen einer Sorptionsbehälter-Anordnung (11) mit Sorptionsmittel nach einem der vorangehenden Ansprüche,
**dadurch gekennzeichnet, dass**
die Hülle (4) der noch leeren Sorptionsbehälter-Anordnung (11) in eine evakuierbare Form-Vorrichtung (10) eingebracht wird, welche die spätere, äußere Form der Hülle (17) aufweist,
anschließend der Raum (15) zwischen äußerer Hülle (17) und Form-Vorrichtung (10) evakuiert wird, bis sich die Hülle (17) an die Form-Vorrichtung (10) anlegt und dann der Innenbereich der Hülle (17) bei Atmosphärendruck mit Sorptionsmittel-Granulat(20) aufgefüllt wird und sodann die Sorptionsbehälter-Anordnung (11) evakuiert und anschließend die Einfüllöffnung für das Granulat (20) gasdicht verschlossen wird und zuletzt das Vakuum zwischen der Form-Vorrichtung (10) und der Hülle (17) geflutet wird.

10. Verfahren zum Betätigen einer Absperreinrichtung zwischen dem Sorptionsbehälter (2) und einem Verdampfer (1) bzw. einem Verflüssiger nach einem der vorangehenden Ansprüche,
**dadurch gekennzeichnet, dass**
die Hülle (4, 17) im Innenbereich mit der Absperreinrichtung verbunden ist und zum Öffnen bzw. Schließen der Absperreinrichtung die Hülle (4, 17) von außen an geeigneter Stelle mechanisch so verformt wird, dass die Absperreinrichtung betätigt wird.

## Claims

1. Sorption container arrangement with a gas-tight casing (4) for receiving a solid sorption medium (5) which on heating desorbs a working medium in vapour form and exothermically sorbs it at relatively low temperatures and wherein heat is supplied or dissipated into the solid sorption medium (5) via the casing (4), the total pressure inside the casing (4) during all operating phases is no higher than the outside atmospheric pressure and the casing (4) is so flexible that it is pressed onto the solid sorption medium (5) by the pressure difference and the solid sorption medium (5) is formed in such a way that it has flow channels for the working medium flowing in or away and serves as a carrying structure for the casing (4), **characterised in that** the casing (4) contains two shells welded peripherally at the edge (9).

2. Sorption container arrangement according to claim 1, **characterised in that** the geometry of the solid sorption medium (5) is selected such that the heat to be dissipated must cover a heat conducting path of a maximum of 2 cm inside the solid sorption medium (5) in order to come into contact with the casing (4).

3. Sorption container arrangement according to any one of the preceding claims, **characterised in that** the solid sorption medium (5) contains a granular packing (20), in particular a packing of spheres.

4. Sorption container arrangement according to any one of the preceding claims, **characterised in that** the sorption medium (5) is contained in parallelepiped shaped parts which are located between the casing (4) and are formed into the flow channels.

5. Sorption container arrangement according to any one of the preceding claims, **characterised in that** the casing (4) contains thin, flexible metal or plastics material sheets with a material thickness of 0.03 mm to 1 mm.

6. Sorption container arrangement according to any one of the preceding claims, **characterised in that** the sorption medium (5) contains zeolites or silicon compounds and the working medium contains water.

7. Sorption container arrangement according to any one of the preceding claims, **characterised in that** the casing (4) has shapings which, in the outer region, are suitable for guiding heat-carrying media, in particular air.

8. Sorption container arrangement according to any one of the preceding claims, **characterised in that** the casing surfaces have undulating shapings which intersect with the respective adjacent casing surface.

9. Method for filling a sorption container arrangement (11) with sorption medium according to any one of the preceding claims, **characterised in that** the casing (4) of the still empty sorption container arrangement (11) is introduced into a mould device (10) which can be evacuated and has the later, outer shape of the casing (17), the space (15) between the outer casing (17) and mould device (10) is then evacuated until the casing (17) rests on the mould device (10) and the inner region of the casing (17) is then filled with granules (20) of sorption medium at atmospheric pressure and the sorption container arrangement (11) is then evacuated and the filling aperture for the granules (20) is then closed in a gas-tight manner and finally the vacuum between the mould device (10) and the casing (17) is flooded.

10. Method for actuating a blocking device between the sorption container (2) and an evaporator (1) or a liquefier according to any one of the preceding claims, **characterised in that** the casing (4, 17) is connected in the inner region to the blocking device and the casing (4, 17) is mechanically formed from outside at a suitable point for opening and closing the blocking device in such a way that the blocking device is actuated.

## Revendications

1. Dispositif à conteneur de sorption, comprenant une enveloppe (4) étanche au gaz de réception d'un agent (5) solide de sorption qui, par chauffage, désorbe sous forme de vapeur un fluide de travail et, à des températures plus basses, le sorbe de manière exothermique et de la chaleur étant apportée en passant par l'enveloppe (4) à l'agent (5) solide de sorption et en étant évacuée,
la pression globale à l'intérieur de l'enveloppe (4) pendant toutes les phases de fonctionnement n'étant pas plus haute que la pression atmosphérique extérieure et l'enveloppe (4) étant si souple qu'elle est appliquée par la différence de pression sur l'agent (5) solide de sorption et l'agent (5) solide de sorption étant constitué de façon à avoir des canaux d'écoulement pour que le fluide de travail entre et sorte et de façon à servir de structure porteuse pour l'enveloppe (4),
**caractérisé en ce que**
l'enveloppe (4) comporte deux hémicoquilles qui sont soudées autour sur le bord (9).

2. Dispositif à récipient de sorption suivant la revendication 1,
**caractérisé en ce que**
la géométrie de l'agent (5) solide de sorption est choisi de façon à ce que la chaleur qui s'évacue ait à parcourir un trajet de propagation de la chaleur de 2 cm au maximum au sein de l'agent (5) solide de sorption pour venir en contact avec l'enveloppe (4).

3. Dispositif suivant l'une des revendications précédentes,
**caractérisé en ce que** l'agent (5) solide de sorption contient un amas (20) de granulés, notamment un amas de billes.

4. Dispositif suivant l'une des revendications précédentes,
**caractérisé en ce que** l'agent (5) de sorption est contenu dans des pièces moulées parallélépipédiques qui se trouvent entre l'enveloppe (4) et qui sont formées dans les canaux d'écoulement.

5. Dispositif suivant l'une des revendications précédentes,
**caractérisé en ce que** l'enveloppe (4) comporte une mince feuille souple métallique ou de matière plastique ayant une épaisseur de 0,03 mm à 1 mm.

6. Dispositif suivant l'une des revendications précédentes,
**caractérisé en ce que** l'agent (5) de sorption contient des zéolithes ou des composés du silicium et le fluide de travail contient de l'eau.

7. Dispositif suivant l'une des revendications précédentes,
**caractérisé en ce que** l'enveloppe (4) a des conformations qui sont appropriées dans la partie extérieure à conduire des fluides caloporteurs, notamment de l'air.

8. Dispositif suivant l'une des revendications précédentes,
**caractérisé en ce que** les surfaces de l'enveloppe ont des conformations ondulées qui s'entrecroisent avec la surface respectivement voisine de l'enveloppe.

9. Procédé de remplissage d'un dispositif (11) à conteneur de sorption d'un agent de sorption suivant l'une des revendications précédentes,
**caractérisé en ce que**
on introduit l'enveloppe (4) du dispositif (11) à conteneur de sorption encore vide dans un dispositif (10) de mise en forme dans lequel on peut faire le vide et qui a la forme extérieure ultérieure de l'enveloppe (17) ;
on fait le vide ensuite dans l'espace (15) compris entre l'enveloppe (17) extérieure et le dispositif (10) de mise en forme jusqu'à ce que l'enveloppe (17) s'applique au dispositif (10) de mise en forme et ensuite on remplit la partie intérieure de l'enveloppe (17) à la pression atmosphérique de granulés (20) d'agent de sorption et on fait immédiatement le vide dans le dispositif (11) à conteneur de sorption et ensuite on ferme d'une manière étanche au gaz l'ouverture d'introduction du granulé (20) et enfin on fait le vide entre le dispositif (10) de mise en forme et l'enveloppe (17).

10. Procédé pour faire fonctionner un dispositif d'obturation entre le conteneur (2) de sorption et un évaporateur (1) ou un appareil de liquéfaction suivant l'une des revendications précédentes, **caractérisé en ce que**
on met l'enveloppe (4, 17) dans la région intérieure en communication avec le dispositif d'obturation et, pour ouvrir ou fermer le dispositif d'obturation, on déforme mécaniquement l'enveloppe (4, 17) de l'extérieur en un point approprié de façon à actionner le dispositif d'obturation.
